(19) **Europäisches Patentamt / European Patent Office / Office européen des brevets**

(11) **EP 2 919 336 A1**

(12) **EUROPEAN PATENT APPLICATION**

(43) Date of publication:
16.09.2015 Bulletin 2015/38

(51) Int Cl.:
*H01S 3/067* (2006.01)   *H01S 3/00* (2006.01)
*H01S 3/16* (2006.01)

(21) Application number: **14159052.1**

(22) Date of filing: **12.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **AIP Leibniz-Institut für Astrophysik
14482 Potsdam (DE)**

(72) Inventor: **Chavez Boggio, Jose
10551 Berlin (DE)**

(74) Representative: **PATERIS Patentanwälte PartmbB
Markgrafenstrasse 22
10117 Berlin (DE)**

(54) **Tunable all-fiber optical frequency comb for astronomical calibration with amplitude modulated laser**

(57)   A method for generating a frequency comb is described. The frequency comb may be used for calibration of astronomical spectrographs. The method comprises the steps of injecting the light of a laser (1) in a phase modulator (2) to generate new frequency sidebands. Then an amplitude modulator (4) modulates the light to form light pulses, the modulated pulses are amplified in a fiber amplifier (5) and subsequently compressed in an optical fiber (6). Simultaneous amplification and compression takes place in an Er:Yb-doped fiber amplifier (7). The amplified and compressed fs-pulses are spectrally broadened in non-linear tapered optical fiber (8) .

Figure 1(a)

EP 2 919 336 A1

Figure 1(b)

**Description**

<u>Field of the Invention</u>

The present invention relates to a method and a device for generating a frequency comb, especially for astronomical applications, for example for calibration of astronomical spectrographs.

<u>Background Art</u>

The present invention generally addresses the technical problem of generating an optical frequency comb with specific characteristics that are suitable for calibration of astronomical spectrographs. If appropriately designed, optical frequency combs have the potential to replace the current utilization of a gas source, for example lamps of Ne, HgCd, Xe, Th/Ar, etc. or Iodine cells, for wavelength calibration of astronomical spectrographs. Frequency combs will provide more calibration lines, more accurate knowledge of the absolute frequency of these lines, narrower line-width, and more uniform relative intensity between the lines.

While there have been important advancements in wavelength calibration after the introduction of laser frequency combs in 2008, due to the complexity of the technology at its present stage, those advancements are solely restricted to high resolution spectrographs (R > 50 000). Laser combs were first proposed for improving the detection of Earth-like extra-solar planets, measurement of possible variations of fundamental physical constants on cosmological scales and the direct observation of the rate of expansion of the universe. Those transformational science goals can only be achieved by measuring extremely small variations in the Doppler shifts in the light emitted by stellar objects [M. Mayor and D. Queloz, "A Jupiter-mass companion to a solar-type star," Nature, vol. 378,355-359, 1995; M. T. Murphy, J. K. Webb, and V.V. Flambaum, "Further evidence for a variable fine-structure constant from Keck/HIRES QSO absorption spectra," Mon. Not. R. Astron. Soc., vol. 345,609-638, 2003; K. Griest et al., "Wavelength Accuracy of the Keck HIRES Spectrograph and Measuring Changes in the Fine Structure Constant," Astr. J., vol. 708,158-170, 2010; A. Loeb, "Direct Measurement of Cosmological Parameters from the Cosmic Deceleration of Extragalactic Objects," Astrophys. J., vol. 499, L111, 1998] and planetary systems over extended periods of time.

However, the current approach that has been developed to produce astronomical combs is very complex restricting its use to high resolution spectrographs. This approach consists in using several stabilized Fabry-Perot (FP) cavities to filter out unwanted comb lines from passive mode-locking lasers [M.T. Murphy et al., "High-Precision wavelength calibration of astronomical spectrographs with laser frequency combs," Mon. Not. Astron. Soc., vol. 380,839-847, 2008; D.A. Braje, M. S. Kirchner, S. Osterman, T. Fortier and S. A. Diddams, "Astronomical spectrograph calibration with broad-spectrum frequency combs", Eur. Phys. J. D, vol. 48,57-66, 2008; T. Steinmetz, T. Wilken, C. Araujo-Hauck, R. Holzwarth, T.W. Hänsch and T. Udem, "Fabry-Pérot filter cavities for wide- spaced frequency combs with large spectral bandwidth", Appl. Phys. B, vol. 96,251-256, 2009]. The filtering increases the spacing of the comb teeth from hundreds of MHz (typical in mode-locked lasers) to tens of GHz, as necessary for astronomical calibration in high resolution spectrographs [C. H. Li, A. J. Benedick, P. Fendel, A. G. Glenday, F. X. Kärtner, D. F. Phillips, D. Sasselov, A. Szentgyorgyi and R. L. Walsworth, "A laser frequency comb that enables radial velocity measurements with a precision of 1 cm s-1 ", Nature, vol. 452,610-612, 2008].

The first attempts to implement this approach were encouraging and a few very preliminary tests have been carried out in astronomical facilities [C. H. Li, A. J. Benedick, P. Fendel, A. G. Glenday, F. X. Kärtner, D. F. Phillips, D. Sasselov, A. Szentgyorgyi and R. L. Walsworth, "A laser frequency comb that enables radial velocity measurements with a precision of 1 cm s-1 ", Nature, vol. 452,610-612, 2008; T. Steinmetz, et al. "Laser frequency combs for astronomical observations," Science, vol. 321,1335-1337, 2008; T. Wilken, C. Lovis, A. Manescu, T. Steinmetz, L. Pasquini, et al., "High precision calibration of spectrographs," Mont. Not. R. Astron. Soc., vol. 405,L16-L20, 2010; A. Manescu, et al., "Approaching cm/s calibration of high resolution astronomical spectrographs," CLEO-Europe, Munich, 2011].

However, using a set of stabilized FP cavities for optical filtering is extremely complex and delicate. Since the bandwidth of a FP cavity is limited by the mirrors dispersion to a few nanometers, it is necessary to broaden the comb after the filtering process is done. This requires amplification and broadening stages, making this "astro" comb generation process very complex. Furthermore, the difficulty in obtaining enough power for amplification precludes going to large comb line separation, where $\Delta f$ = 20 GHz is the largest already tested. As a consequence, at present time uniquely high-resolution spectrographs are being targeted [A. Manescu, et al., "Approaching cm/s calibration of high resolution astronomical spectrographs," CLEO-Europe, Munich, 2011]. While high-resolution spectrographs are required for detection of bright astronomical objects, they cannot guarantee enough signal-to-noise-ratio for very faint extragalactic light for which medium- or low-resolution spectrographs are the necessary choice. This put additional requirements on the versatility of the calibration source. Transformational science goals are expected when improving the calibration of medium and low resolution spectrographs. Those include stellar population, binarity among late-type stars, determination of the orbit of stars in a cluster by more accurate measurements of velocity of stars in different locations within the cluster, etc. Furthermore, spectroscopy and line-by-line waveform generation will benefit from frequency combs with large mode spacing (> 20 GHz).

Description of the invention

It is therefore an objective of the present invention to provide an advantageous method and an advantageous device for generating a frequency comb.

This objective is solved by a method for generating a frequency comb as claimed in claim 1 and by a device for generating a frequency comb as claimed in claim 15. The depending claims define further developments of the present invention.

The inventive method for generating a frequency comb comprises the steps of:

- injecting the light of a laser in a phase modulator to generate new frequency sidebands,
- amplitude modulating the light to form light pulses,
- amplifying the phase and/or amplitude modulated light pulses,
- compressing the amplified light pulses,
- simultaneously amplifying and further compressing the compressed pulses, and
- spectral broadening of the compressed pulses.

The inventive method for generating a frequency comb for example comprises the steps of

- Coupling the light of two stabilized lasers (for comb spacing larger than 40 GHz) or injecting the light of a stabilized laser (for comb spacing smaller than 40 GHz)in a phase modulator to generate new frequency sidebands,
- amplitude modulating the light to form light pulses,
- amplifying the amplitude modulated light pulses,
- pre-compressing the amplified light pulses,
- amplifying and further compressing the compressed pulses, and
- spectral broadening: propagating the compressed pulses through a low dispersion fibre/waveguide.

The present invention reduces the complexity, size and costs of astronomical frequency combs. Furthermore, the use of amplitude modulation allows for a reduction of the average power by a factor of 10 or more, and this allows increasing the mode spacing by the same factor. This fact opens the possibility of accessing spectrographs with 10 times smaller resolutions. Moreover, the described method provides a technique to generate frequency combs with characteristics appropriate for calibration of high, but specially low- andmedium-resolution astronomical spectrographs.

Preferably the described method comprises the following steps: The light of two stabilized lasers (for comb spacing larger than 40 GHz) or one phase modulated stabilized laser (for comb spacing smaller than 40 GHz) is amplitude modulated to form light pulses, for example Gaussian pulses. Then, the amplitude modulated light pulses are amplified. The amplified light pulses are propagated in the first fiber stage, where an initial compression takes place. Then, the light pulses are propagated through a rare-earth-doped fiber, where amplification and compression occurs simultaneously. Then, the compressed pulses are propagated through a nonlinear tapered fiber for spectral broadening, for example to at least one octave bandwidth.

Advantageously the used phase modulator and/or the used amplitude modulator are driven by a microwave signal. For example, the phase modulator and/or the amplitude modulator are driven by a low noise RF signal. Advantageously a microwave signal is used, which is tunable from 20 to 40 GHz.

The sideband separation may be stabilized by the noise characteristics of a used microwave source. For the high resolution case (comb spacing smaller than 40 GHz), preferably the sideband separation is stabilized at a value between 40 kHz and 80 kHz, for example 70 kHz. Furthermore, the relative intensity of the sidebands can be adjusted, for example by controlling the driving voltage. For the medium and low resolution case (comb spacing larger than 40 GHz), the sideband separation is stabilized at a value between 1 MHz and 10 MHz, for example 5 MHz.

Generally a laser with a linewidth between 10 kHz and 30 kHz, for example 20 kHz may be used. The used laser may have a power between 1 mW and 50 mW, advantageously between 1 mW and 20 mW, preferably between 1 mW and 10 mW. The used laser may have a wavelength in the infrared spectral region (between 1 mm and 780 nm).

During the amplitude modulation preferably Gaussian pulses are formed. The formed Gaussian pulses may have a width between 50 ns and 400 ns, advantageously between 150 ns and 300 ns, for example 200 ns.

For the high resolution case, it is advantageous to keep a linewidth of each comb tooth below 1 MHz. For the medium- and low-resolution case, it is advantageous to keep a linewidth of each comb tooth below 20 MHz, preferably below 5 MHz. This can be realized by using a duty cycle between 1/10 and 1/40. The duty cycle should be between 1/10 and 1/40 in order to keep the linewidth of each comb tooth below 2 MHz. This is necessary in order to determine the center frequency with better than 500 kHz accuracy ($4 \times 10^{-10}$ relative accuracy).

Generally, the phase and amplitude modulated light pulses can be amplified with an optical amplifier, for example with a low noise optical amplifier. Preferably the phase and amplitude modulated light pulses are amplified to at least 100 mW peak power.

An Erbium/Ytterbium doped fiber pumped with a laser emitting at 910, 940 or 980 nm can be used for simultaneously amplifying and compressing the pulses. Generally the used fibers, for example the fiber stages for initial compression and/or the rare-earth-doped fiber, can be optimized for maximum compression and/or low-noise build-up. Advantageously pulses are compressed to a width of at least 60 fs and at least 1 kW peak power.

The inventive device for generating a frequency comb comprises a laser, a phase modulator (for comb spacing smaller than 40 GHz), an amplitude modulator, a means for amplifying the phase and/or amplitude modulated light pulses, a means for compressing the amplified light pulses, a means for simultaneously amplifying and compressing a compress pulses and a means for spectrally broadening the compressed pulses. The inventive device has the same advantages as the previously described inventive method. Generally, the inventive method can be performed by means of the inventive device.

The mentioned phase modulator may be configured to generate new frequencies sidebands. The amplitude modulator may be configured to form light pulses, for example Gaussian light pulses. The mentioned means for compressing the amplified light pulses may be a compressor comprising a fiber stage. The mentioned means for simultaneously amplifying and compressing the compressed pulses may be an amplifier. The mentioned means for spectrally broadening the compressed pulses may comprise a nonlinear fiber stage, for example a nonlinear tapered fiber. The nonlinear tapered fiber may be configured for spectral broadening to at least one octave bandwidth.

The phase modulator and/or the amplitude modulator may comprise a microwave source. The phase modulator may be configured to be driven by a low noise RF signal. The phase modulator may be tunable form 20 to 40 GHz. The means for simultaneously amplifying and compressing may comprise a rare-earth-doped fiber, for example an Erbium/Ytterbium-doped fiber, or generally an erbium amplifier.

The laser may have a linewidth between 5 kHz and 20 kHz (for high resolution), for example 10 kHz; or a linewidth between 5 kHz and 5 MHz (for low and medium resolution), for example 1 MHz. It may have a power between 1 mW and 50 mW, for example between 1 mW and 20 mW, preferably between 1 mW and 10 mW. The laser may have a wavelength in the infrared spectral region (between 1 mm and 780 nm).

The described invented technique has the advantage that an optical frequency comb can be generated with at least one of the following characteristics:

The spacing between comb teeth is tunable from 20 to 1 THz. A broad spectral coverage, for example one octave, is realized. The comb lines have an intensity uniformity of less than 10 dB intensity variation. Furthermore, the relative accuracy of comb line frequency is $\frac{\Delta\lambda}{\lambda} = 4 * 10^{-10}$. Furthermore, a stability of the generated optical frequency comb over an extended period of time, for example years, can be realized.

The described invention is advantageously applicable in astronomical instrumentation for ground breaking scientifically results, for example detection of earth-like extra-solar planets, measurement of possible variations of fundamental physical constants and cosmological scales and the direct observation of the rate of expansion of the universe by measuring extremely small variations in the Doppler shifts in the light emitted by quasars and planetary systems over extended periods of time. Transformational science goals are expected also when improving the calibration of medium and low resolution spectrographs as stellar population, binarity among late-type stars, and determination of the orbit of stars in a cluster by more accurate measurements of velocity of stars in different locations within the cluster, etc. Furthermore, spectroscopy and line-by-line waveform generation will benefit from frequency combs with large mode spacing (> 20 GHz).

Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.

Figure 1(a)    schematically shows a device for generating a frequency comb for high resolution spectrographs.

Figure 1(b)    schematically shows a device for generating a frequency comb for medium and low resolution spectrographs.

Figure 2    schematically shows the generation of a frequency comb.

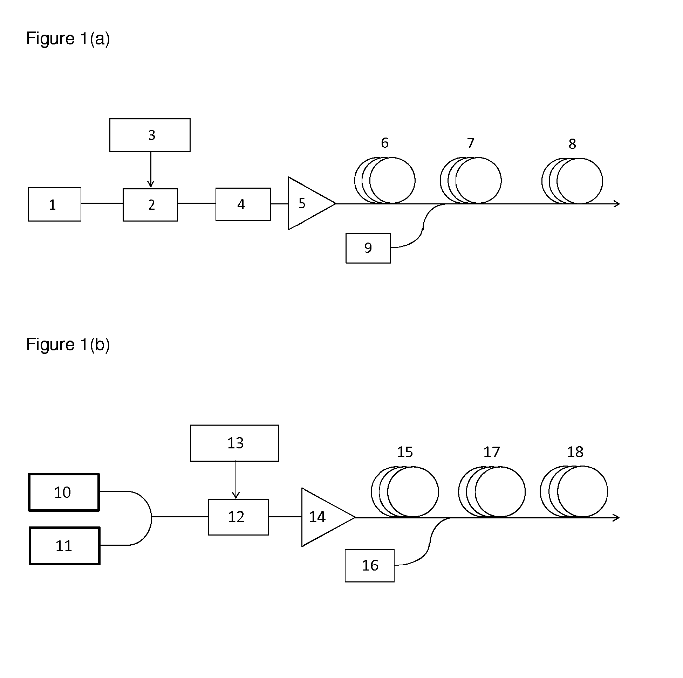

Figure 1(a) schematically shows the generation of astronomical frequency combs with small mode spacing (smaller than 40 GHz). The light of a stabilized laser 1 is injected in a phase modulator 2 to generate new frequencies sidebands. The phase modulator 2 is preferably driven by a low noise RF signal 3. The phase modulator can be tunable from 20 to 40 GHz. The sideband separation stability can advantageously be determined by the noise characteristics of the RF source 3. For astronomical calibration purpose the required stability is 60 KHz, which provides 3 cm/s radial velocity accuracy. This is within the range of off-the-shelf microwave sources. The relative intensity of the sidebands is preferably adjusted by controlling the driving voltage.

The laser linewidth is 10 KHz, which is typical in commercial lasers. The power is a few mW, for example between 1 mW and 50 mW, advantageously between 1 mW and 20 mW, preferably between 1 mW and 10 mW. The wavelength is for example set in the infrared spectral region.

After the light has been phase modulated it passes through an amplitude modulator 4 to form pulses, preferably Gaussian pulses. The formed pulses can have width of about 300 ns, for example between 250 ns and 350 ns. The duty cycle should be between 1/10 and 1/40 in order to keep the linewidth of each comb teeth below 1 MHz. This is necessary in order to determine the center frequency with better than 100 KHz accuracy or $4 \times 10^{-10}$ relative accuracy. The phase and amplitude modulated light is amplified, for example with a low-noise optical amplifier 5, to a few hundreds of mW peak power, for instance to a value between 100 mW and 500 mW peak power.

Then, the modulated and amplified light is propagated in a first fiber stage 6 where an initial compression takes place. Then, the pulses are propagated through a rare-earth-doped fiber, for example an Erbium/Ytterbium fiber, where amplification and compression occurs simultaneously (means for amplification and compression 7). The fiber is pumped with a pump laser 9 with center wavelength at 910 nm, 940 nm or 980 nm. The parameters of these two fibers, namely the fiber of the means for initial compression 6 and the rare-earth-doped fiber of the means for simultaneously amplification and compression 7, are for example optimized for maximum compression and low-noise build-up.

The compressed pulses, which may have a width of at least 60 fs and a peak power of at least 1 kW, are then propagated through a nonlinear tapered fiber for spectral broadening 8. The pulses may be broadened to one octave bandwidth.

Figure 1(b) schematically shows the generation of astronomical frequency combs with large mode spacing (larger than 40 GHz). The light of two stabilized lasers 10 and 11 is combined and then injected in an amplitude modulator 12 to to form pulses, preferably Gaussian pulses whose noise characteristics are dictated by a microwave source 13. The formed pulses can have width of about 300 ns, for example between 250 ns and 350 ns. The duty cycle should be between 1/10 and 1/40 in order to keep the linewidth of each comb teeth below 20 MHz. This is necessary in order to determine the center frequency with better than 1 MHz accuracy or $4 \times 10^{-9}$ relative accuracy. The amplitude modulated light is amplified, for example with a low-noise optical amplifier 14, to a few hundreds of mW peak power, for instance to a value between 100 mW and 500 mW peak power. The laser linewidth is 1 MHz, which is typically in commercial lasers. The power is a few mW, for example between 1 mW and 50 mW, advantageously between 1 mW and 20 mW, preferably between 1 mW and 10 mW. The wavelength is for example set in the infrared spectral region.

Then, the modulated and amplified light is propagated in a first fiber stage 15 where an initial compression takes place. Then, the pulses are propagated through a rare-earth-doped fiber, for example an erbium amplifier, where amplification and compression occurs simultaneously (means for amplification and compression 17). The parameters of these two fibers, namely the fiber of the means for initial compression 6 and the rare-earth-doped fiber of the means for simultaneously amplification and compression 17, are for example optimized for maximum compression and low-noise build-up. The rare earth-doped fiber is pumped with a pump laser 16 with center wavelength at 910 nm, 940 nm or 980 nm.

The compressed pulses, which may have a width of at least 60 fs and a peak power of at least 1 kW, are then propagated through a nonlinear tapered fiber for spectral broadening 8. The pulses may be broadened to one octave bandwidth.

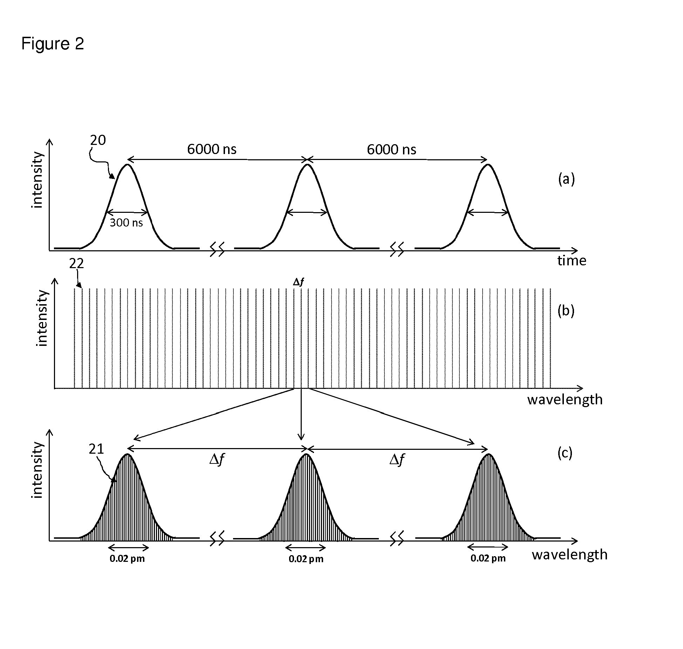

Figure 2 schematically shows the generation of a frequency comb. Figure 2 (a) schematically shows the intensity depending on the time. The phase modulated light is amplitude modulated with Gaussian pulses 20 of 300 ns width and 1/20 duty cycle. The distance between two Gaussian pulses 20 is in the present example 6000 ns.

In Figure 2 (b) a frequency comb is shown. The intensity of the comb teeth 22 depending on the wavelength is shown. The frequency comb is generated with a mode spacing given by the microwave frequency driving the phase modulator. The frequency difference between two neighboring comb teeth is indicated by Δf.

Figure 2 (c) schematically shows a zoom of a comb mode. The diagram shows the intensity depending on the wavelength. An array of lines 21 is generated with a Gaussian envelope shape. The frequency maxima are separated by 1/6000 ns. The single pulses are broadened to 0.02 pm.

The present invention provides a method and a device for generation frequency combs especially for astronomical applications, which have a reduced complexity, size and cost compared with other known solutions. The use of amplitude modulation allows for a reduction of average power by a factor of 10 and more, and this allows increasing the mode spacing by the same factor, which opens the possibility of accessing spectrographs with a factor of 10 times smaller resolutions.

References:

[1] M. Mayor and D. Queloz, "A Jupiter-mass companion to a solar-type star," Nature, vol. 378,355-359, 1995.
[2] M. T. Murphy, J. K. Webb, and V.V. Flambaum, "Further evidence for a variable fine-structure constant from Keck/HIRES QSO absorption spectra," Mon. Not. R. Astron. Soc., vol. 345,609-638, 2003.
[3] K. Griest et al., "Wavelength Accuracy of the Keck HIRES Spectrograph and Measuring Changes in the Fine Structure Constant," Astr. J., vol. 708,158-170, 2010.

[4] A. Loeb, "Direct Measurement of Cosmological Parameters from the Cosmic Deceleration of Extragalactic Objects," Astrophys. J., vol. 499,L111, 1998.

[5] M.T. Murphy et al., "High-Precision wavelength calibration of astronomical spectrographs with laser frequency combs," Mon. Not. R. Astron. Soc., vol. 380,839-847, 2008.

[6] D.A. Braje, M. S. Kirchner, S. Osterman, T. Fortier and S. A. Diddams, "Astronomical spectrograph calibration with broad-spectrum frequency combs", Eur. Phys. J. D, vol. 48,57-66, 2008.

[7] T. Steinmetz, T. Wilken, C. Araujo-Hauck, R. Holzwarth, T.W. Hänsch and T. Udem, "Fabry-Pérot filter cavities for wide- spaced frequency combs with large spectral bandwidth", Appl. Phys. B, vol. 96,251-256, 2009.

[8] C. H. Li, A. J. Benedick, P. Fendel, A. G. Glenday, F. X. Kärtner, D. F. Phillips, D. Sasselov, A. Szentgyorgyi and R. L. Walsworth, "A laser frequency comb that enables radial velocity measurements with a precision of 1 cm s-1 ", Nature, vol. 452,610-612, 2008.

[9] T. Steinmetz, et al. "Laser frequency combs for astronomical observations", Science, vol. 321,1335-1337, 2008.

[10] T. Wilken, C. Lovis, A. Manescu, T. Steinmetz, L. Pasquini, et al., "High precision calibration of spectrographs," Mont. Not. R. Astron. Soc., vol. 405,L16-L20, 2010.

[11] A. Manescu, et al., "Approaching cm/s calibration of high resolution astronomical spectrographs," CLEO-Europe, Munich, 2011.

**Claims**

1. A method for generating a frequency comb, comprising the steps of:

    - injecting the light of a laser (1) in a phase modulator (2) to generate new frequency sidebands,
    - amplitude modulating the light to form light pulses,
    - amplifying the phase and/or amplitude modulated light pulses,
    - compressing the amplified light pulses,
    - simultaneously amplifying and further compressing the compressed pulses, and
    - spectral broadening of the compressed pulses.

2. The method as claimed in claim 1, comprising the steps of:

    - injecting the light of a stabilized laser (1) in the phase modulator (2) to generate new frequency sidebands or combining two stabilized lasers (10) and (11),
    - then amplitude modulating the light to form light pulses,
    - then amplifying the phase and/or amplitude modulated light pulses,
    - then propagating the amplified light pulses in a first fiber stage where an initial compression takes place,
    - then propagating the light pulses through a rare-earth-doped fiber, where amplification and compression occurs simultaneously,
    - then propagating the compressed pulses through a nonlinear tapered fiber for spectral broadening to one octave bandwidth.

3. The method as claimed in claim 1 or claim 2, **characterized in** driving the used phase modulator (2) and/or the used amplitude modulator (4) by a microwave signal.

4. The method as claimed in claim 3, **characterized in** using a microwave signal, which is tunable from 20-40 GHz.

5. The method as claimed in any of the claims 1 to 4, **characterized in** stabilizing the sideband separation by the noise characteristics of a used microwave source.

6. The method as claimed in claim 5, **characterized in** stabilizing the sideband separation at a value between 40 kHz and 80 kHz for high resolution spectrographs or between 1 MHz and 10 MHz for low- and medium-resolution spectrographs.

7. The method as claimed in any of the claims 1 to 6, **characterized in** adjusting the relative intensity of the sidebands.

8. The method as claimed in any of the claims 1 to 7, **characterized in** using a laser (1) with a linewidth between 10 kHz and 30 kHz for the high-resolution case and using two lasers (10) and (11) with linewidth between 1 MHz and 10 MHz for the low and medium-resolution case and/or with a power between 1 mW and 50 mW and/or with a wavelength in the infrared spectral region.

9. The method as claimed in any of the claims 1 to 8, **characterized in** forming Gaussian pulses during the amplitude modulation.

10. The method as claimed in claim 9, **characterized in**

forming Gaussian pulses having a width between 50 ns and 400 ns.

11. The method as claimed in any of the claims 1 to 10, **characterized in** keeping the linewidth of each comb tooth below 1 MHz for the high resolution case and 20 MHz for the low- and medium-resolution case.

12. The method as claimed in any of the claims 1 to 11, **characterized in** using an optical amplifier (5) (14) for amplifying the phase and amplitude modulated light pulses to at least 100 mW peak power.

13. The method as claimed in any of the claims 1 to 12, **characterized in** using an Erbium/Ytterbium doped fiber (7) for simultaneously amplifying and compressing the pulses.

14. The method as claimed in any of the claims 1 to 13, **characterized in** compressing the pulses to a width of at least 60 fs and at least 1 kW peak power.

15. A device for generating a frequency comb **characterized in that** for the high-resolution case, it comprises a laser (1), a phase modulator (2), an amplitude modulator (4), a means for amplifying phase and amplitude modulated light pulses, a means (6) for compressing the amplified light pulses, a means (7) for simultaneously amplifying and compressing the compressed pulses, and a means (8) for spectrally broadening the compressed pulses, and/or for the low- and medium-resolution case, it comprises two lasers (10) and (11), an amplitude modulator (12), a means for amplifying phase and amplitude modulated light pulses (14), a means (15) for compressing the amplified light pulses, a means (17) for simultaneously amplifying and compressing the compressed pulses, and a means (18) for spectrally broadening the compressed pulses.

Figure 1(a)

Figure 1(b)

Figure 2

Europäisches
Patentamt

European
Patent Office

Office européen
des brevets

# EUROPEAN SEARCH REPORT

Application Number

EP 14 15 9052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ATAIE VAHID ET AL: "Spectrally Equalized Frequency Comb Generation in Multistage Parametric Mixer With Nonlinear Pulse Shaping", JOURNAL OF LIGHTWAVE TECHNOLOGY, IEEE SERVICE CENTER, NEW YORK, NY, US, vol. 32, no. 4, 1 February 2014 (2014-02-01), pages 840-846, XP011537155, ISSN: 0733-8724, DOI: 10.1109/JLT.2013.2287852 [retrieved on 2014-01-13] | 1,3-8, 12,15 | INV. H01S3/067 H01S3/00  ADD. H01S3/16 |
| Y | * page 840, right-hand column, paragraph 2 - page 844, right-hand column, paragraph 2; figures 1,2,8-10,12 * ----- | 2,9-11, 13,14 | |
| Y | CHAVEZ BOGGIO J M ET AL: "Astronomical optical frequency comb generation in nonlinear fibres and ring resonators: optimization studies", PROCEEDINGS OF SPIE, S P I E - INTERNATIONAL SOCIETY FOR OPTICAL ENGINEERING, US, vol. 8450, 13 September 2012 (2012-09-13), pages 84501H-84501H, XP060028550, ISSN: 0277-786X, DOI: 10.1117/12.925535 * pages 84501H-1, paragraph 2 - pages 84501H-4, paragraph 2; figures 1-3 * ----- | 1-15 | TECHNICAL FIELDS SEARCHED (IPC)  H01S G01J |
| Y | RUI WU ET AL: "Flat-topped and Gaussian dual-shape optical frequency comb generator using only intensity and phase modulators", IEEE PHOTONICS SOCIETY, 2010 23RD ANNUAL MEETING OF THE, IEEE, PISCATAWAY, NJ, USA, 7 November 2010 (2010-11-07), pages 592-593, XP031858299, ISBN: 978-1-4244-5368-9 * page 592; figures 1-3 * ----- | 1-15 | |

The present search report has been drawn up for all claims

| Place of search | Date of completion of the search | Examiner |
|---|---|---|
| Munich | 29 July 2014 | Laenen, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MAYOR ; D. QUELOZ.** A Jupiter-mass companion to a solar-type star. *Nature,* 1995, vol. 378, 355-359
- **M. T. MURPHY ; J. K. WEBB ; V.V. FLAMBAUM.** Further evidence for a variable fine-structure constant from Keck/HIRES QSO absorption spectra. *Mon. Not. R. Astron. Soc.,* 2003, vol. 345, 609-638
- **K. GRIEST et al.** Wavelength Accuracy of the Keck HIRES Spectrograph and Measuring Changes in the Fine Structure Constant. *Astr. J.,* 2010, vol. 708, 158-170
- **A. LOEB.** Direct Measurement of Cosmological Parameters from the Cosmic Deceleration of Extragalactic Objects. *Astrophys. J.,* 1998, vol. 499, L111
- **M.T. MURPHY et al.** High-Precision wavelength calibration of astronomical spectrographs with laser frequency combs. *Mon. Not. R. Astron. Soc.,* 2008, vol. 380, 839-847
- **D.A. BRAJE ; M. S. KIRCHNER ; S. OSTERMAN ; T. FORTIER ; S. A. DIDDAMS.** Astronomical spectrograph calibration with broad-spectrum frequency combs. *Eur. Phys. J. D,* 2008, vol. 48, 57-66
- **T. STEINMETZ ; T. WILKEN ; C. ARAUJO-HAUCK ; R. HOLZWARTH ; T.W. HÄNSCH ; T. UDEM.** Fabry-Pérot filter cavities for wide- spaced frequency combs with large spectral bandwidth. *Appl. Phys. B,* 2009, vol. 96, 251-256
- **C. H. LI ; A. J. BENEDICK ; P. FENDEL ; A. G. GLENDAY ; F. X. KÄRTNER ; D. F. PHILLIPS ; D. SASSELOV ; A. SZENTGYORGYI ; R. L. WALSWORTH.** A laser frequency comb that enables radial velocity measurements with a precision of 1 cm s-1. *Nature,* 2008, vol. 452, 610-612
- **T. STEINMETZ et al.** Laser frequency combs for astronomical observations. *Science,* 2008, vol. 321, 1335-1337
- **T. WILKEN ; C. LOVIS ; A. MANESCU ; T. STEINMETZ ; L. PASQUINI et al.** High precision calibration of spectrographs. *Mont. Not. R. Astron. Soc.,* 2010, vol. 405, L16-L20
- **A. MANESCU et al.** Approaching cm/s calibration of high resolution astronomical spectrographs. *CLEO-Europe, Munich,* 2011